# EUROPÄISCHE PATENTSCHRIFT

(11) **EP 2 726 230 B1**
(45) Veröffentlichungstag und Bekanntmachung des Hinweises auf die Patenterteilung: **01.02.2017**
(21) Anmeldenummer: 12729877.6
(22) Anmeldetag: 22.06.2012
(51) Int. Cl.: B21F 27/20

(54) **VERFAHREN UND EINRICHTUNG ZUR KONTINUIERLICHEN HERSTELLUNG EINES GITTERTRÄGERS**
METHOD AND DEVICE FOR CONTINUOUSLY PRODUCING A MESH-TYPE SUPPORT
PROCÉDÉ ET INSTALLATION DESTINÉS À LA FABRICATION CONTINUE D'UNE POUTRE À TREILLIS

(30) Priorität: 30.06.2011 AT 9512011
(43) Veröffentlichungstag der Anmeldung: 07.05.2014
(73) Patentinhaber: Progress Maschinen & Automation AG, 39042 Brixen (IT)
(72) Erfinder: NUSSBAUMER, Erich, I-39010 Nals (IT) (IT); ENDERES, Karl Friedrich, 39042 Brixen (IT) (IT)
(74) Vertreter: Torggler & Hofinger Patentanwälte
(86) Internationale Anmeldenummer: PCT/EP2012/002634
(87) Internationale Veröffentlichungsnummer: WO 2013/000551

(56) Entgegenhaltungen:
- WO-A1-2005/021181

## Beschreibung

Die Erfindung betrifft ein Verfahren zur kontinuierlichen Herstellung eines Gitterträgers unter Verschweißen einer Untergurtanordnung, die wenigstens einen Untergurt, insbesondere zwei Untergurte, umfasst, und eines in einer bestimmten Höhe zur Untergurtanordnung angeordneten Obergurtes mit wenigstens einem zwischen dem wenigstens einen Untergurt und dem Obergurt, insbesondere zickzackförmig, hin- und herverlaufenden Diagonalgurt, wobei das Verschweißen des wenigstens einen Untergurtes und des Obergurtes mit dem wenigstens einen Diagonalgurt mittels einer Untergurt-Schweißvorrichtung und einer Obergurt-Schweißvorrichtung erfolgt.

Die Erfindung betrifft weiters eine Einrichtung zur kontinuierlichen Herstellung eines Gitterträgers aus einer Untergurtanordnung, die wenigstens einen Untergurt, insbesondere zwei Untergurte, umfasst, einem in einer bestimmten Höhe zur Untergurtanordnung angeordneten Obergurt und wenigstens einem zwischen dem wenigstens einen Untergurt und dem Obergurt, insbesondere zickzackförmig, hin- und herverlaufenden Diagonalgurt, wobei der wenigstens eine Untergurt und der Obergurt mit dem wenigstens einen Diagonalgurt verschweißt sind und die Einrichtung für diese Verschweißung eine Untergurt-Schweißvorrichtung und eine Obergurt-Schweißvorrichtung umfasst.

Gitterträger sind werksmäßig vorgefertigte Bewehrungselemente zum Einsatz von Fertigteilwerken. Sie werden in Fertigteilwerken insbesondere zur Herstellung von Elementdecken (Plattendecken, Halbfertigteildecken, Filigrandecken) und doppelschaligen Wänden verwendet. Gitterträger bestehen üblicherweise aus zwei Untergurten aus zumeist profilierten oder gerippten Betonstählen, zwei daran angeschweißten, zickzackförmigen Diagonalgurten aus zumeist glatten Betonstählen sowie einem mit den Diagonalgurten verschweißten Obergurt aus zumeist glattem Betonstahl.

Gitterträger sind in der Regel nur in bestimmten Standardgrößen erhältlich. Zu den charakteristischen Größen eines Gitterträgers zählen vor allem die Höhe, in welcher der Obergurt zur Untergurtanordnung angeordnet ist, die Länge des Gitterträgers sowie der Drahtdurchmesser der Gurte. Nur wenige Hersteller von Gitterträgern sind in der Lage, auf die spezifischen Bedürfnisse eines die Gitterträger weiterverarbeitenden Kunden einzugehen. Das bedeutet, dass der Kunde eine Reihe von Nachteilen in Kauf nehmen muss:
- Er benötigt oftmals von einem bestimmten Gitterträgertyp nur eine bestimmte Stückzahl, muss aber häufig eine Mindestmenge abnehmen. Das ist vor allem dann problematisch, wenn bei einem Bauwerk viele verschiedene Gitterträgetypen notwendig sind. Die nicht benötigten Gitterträger muss der Kunde zwischenlagern, wobei er nicht nur den hierfür erforderlichen Platz sondern auch noch geeignete Geräte zum Handling der sperrigen Gitterträger bereitstellen muss. Die Abnahme einer Mindestmenge eines bestimmten Gitterträgertyps ist auch vor dem Hintergrund stark schwankender Stahlkosten problematisch.
- Muss er einen Gitterträger, der bestimmte Standardgrößen aufweist, für seine spezifischen Zwecke umarbeiten, so fällt ein großer Verschnitt an. Außerdem sind zusätzliche, nur selten normgerechte Schweißarbeiten erforderlich. Die Modifikationsarbeiten verursachen des Weiteren häufig rostanfällige Schwachstellen.
- Die vorbeschriebenen Nachteile führen insgesamt zu erhöhten Kosten.

Es gibt erste Ansätze, die Herstellung von Gitterträgern flexibler zu gestalten, um besser auf die spezifischen Bedürfnisse eines die Gitterträger weiterverarbeitenden Kunden einzugehen. Die WO 2005/021181 A1 zeigt beispielsweise ein Verfahren und eine Vorrichtung zum Herstellen von Gitterträgern beliebiger Länge. Hierzu werden die Gitterträger in vorbestimmten Schnittpositionen vom kontinuierlich hergestellten Materialstrang abgetrennt. Die Änderung der übrigen Größen eines Gitterträgers, insbesondere der Höhe, in welcher der Obergurt zur Untergurtanordnung angeordnet ist, ist allerdings auch in diesem Fall mit einem vergleichsweise hohen Umstellaufwand verbunden. Üblicherweise muss hierfür auch die Produktion unterbrochen werden.

Die Aufgabe der vorliegenden Erfindung besteht darin, die vorbeschriebenen Nachteile zu vermeiden und ein gegenüber dem Stand der Technik verbessertes und vereinfachtes Verfahren der einleitend angegebenen Art sowie eine entsprechende Einrichtung zu schaffen.

Diese Aufgabe wird erfindungsgemäß durch die Merkmale der beiden unabhängigen Patentansprüche 1 und 8 gelöst.

Eine der Grundideen der Erfindung besteht also darin, dass die Höhe des Obergurtes zur Untergurtanordnung während der kontinuierlichen Herstellung des Gitterträgers geändert wird. Bei der erfindungsgemäßen Einrichtung, für die neben dem erfindungsgemäßen Verfahren ebenfalls Schutz begehrt wird, ist zu diesem Zweck eine Vorrichtung zur Höhenverstellung des Obergurtes während der kontinuierlichen Herstellung des Gitterträgers vorgesehen. Bei dieser Vorrichtung zur Höhenverstellung des Obergurtes kann es sich beispielsweise um einen höhenverstellbaren Träger handeln, auf dem eine Haltevorrichtung für den Obergurt angeordnet ist. Vorteilhafterweise umfasst diese Haltevorrichtung eine Zange, Klemme oder eine andere zu diesem Zweck von einem Fachmann üblicherweise verwendete technische Lösung zur lösbaren Befestigung des Obergurtes.

Um eine Verbiegung des Obergurtes während der Änderung seiner Höhe zur Untergurtanordnung zu vermeiden, ist es darüber hinaus vorgesehen, dass der Obergurt vor einer solchen Höhenänderung zerschnitten wird. Hierzu umfasst die erfindungsgemäße Einrichtung eine Schneidevorrichtung zum Zerschneiden des Obergurtes. Diese Schneidevorrichtung kann z.B. auf dem bereits erwähnten höhenverstellbaren Träger angeordnet sein.

Ein weiterer wesentlicher Vorteil, der sich aus der Kombination der erfindungsgemäßen Vorrichtung zur Höhenverstellung des Obergurtes während der kontinuierlichen Herstellung des Gitterträgers und dem Vorhandensein einer Schneidevorrichtung zum Zerschneiden des Obergurtes ergibt, ist, dass eine "ad hoc"-Umstellung auf die Produktion eines Gitterträgers mit einer geänderten Obergurt-Höhe ohne nennenswerten Materialverlust möglich ist. Die Höhenänderung kann dabei vollständig zwischen zwei Schweißtakten (für die Verschweißung des Obergurtes mit den Diagonalträgern) erfolgen. Auf diese Weise ist auch eine produktbezogene "just in time"-Herstellung realisierbar: Es ist nämlich häufig der Fall, dass für eine bestimmte Betonform Gitterträger mit unterschiedlichen Obergurt-Höhen und in unterschiedlicher Stückzahl nachgefragt werden. Durch die flexible Umstellmöglichkeit kann diesem Wunsch zeitnah nachgekommen werden.

Wie bereits einleitend ausgeführt, erfolgt das Verschweißen des wenigstens einen Untergurtes und des Obergurtes mit dem wenigstens einen Diagonalgurt mittels einer Untergurt-Schweißvorrichtung und einer Obergurt-Schweißvorrichtung. Wird nun die Höhe des Obergurtes zur Untergurtanordnung während der kontinuierlichen Herstellung des Gitterträgers geändert, so ist es vorteilhaft, die Winkellage der Untergurt-Schweißvorrichtung und/oder die Höhe der Obergurt-Schweißvorrichtung und/oder die Winkellage der Obergurt-Schweißvorrichtung im Rahmen der Änderung der Höhe des Obergurtes zur Untergurtanordnung zu ändern. Auf diese Weise kann sichergestellt werden, dass die Verschweißung stets in einer optimalen Weise erfolgt. Die erfindungsgemäße Einrichtung umfasst zur Durchführung dieser beiden Verfahrensschritte vorteilhafterweise eine Einrichtung zum Verstellen der Winkellage der Untergurt-Schweißvorrichtung und/oder eine Vorrichtung zum Verstellen der Höhe und/oder der Winkellage der Obergurt-Schweißvorrichtung.

Es hat sich als besonders günstig herausgestellt, wenn der Obergurt und/oder der wenigstens eine Untergurt schrittweise der Obergurt-Schweißvorrichtung bzw. der Untergurt-Schweißvorrichtung zugeführt wird. Idealerweise ist diese schrittweise Zufuhr dem Schweißtakt der beiden Schweißvorrichtungen angepasst. Zur technischen Realisierung der schrittweisen Zufuhr des Obergurtes und/oder des wenigstens einen Untergurtes zur Obergurt-Schweißvorrichtung bzw. Untergurt-Schweißvorrichtung kann die erfindungsgemäße Einrichtung beispielsweise eine Vorschubvorrichtung umfassen. Im einfachsten Fall ist diese Vorschubvorrichtung auf einem Linearschlitten angeordnet und vorzugsweise über einen Exzenterhebel bewegbar. Zur lösbaren Befestigung des Obergurtes und/oder des wenigstens einen Untergurtes kann die Vorschubvorrichtung Zangen, Klemmen oder andere zu diesem Zweck von einem Fachmann üblicherweise verwendete technische Lösungen umfassen. Wenn es sich bei der Vorrichtung zur Höhenverstellung des Obergurtes um einen höhenverstellbaren Träger handelt, ist es vorteilhaft, die Vorschubvorrichtung ebenfalls auf diesem höhenverstellbaren Träger anzuordnen.

Um sicherzustellen, dass der Obergurt in optimaler Weise der Obergurt-Schweißvorrichtung zugeführt wird, kann es vorgesehen sein, im Zuge des erfindungsgemäßen Verfahrens den Obergurt vor seiner Verschweißung mit dem wenigstens einen Diagonalgurt zu zentrieren. Hierzu umfasst die entsprechende erfindungsgemäße Einrichtung idealerweise eine Zentriervorrichtung, die vorzugsweise mit einer Zange, Klemme oder einer anderen zu diesem Zweck von einem Fachmann üblicherweise verwendeten technischen Lösung zur lösbaren Befestigung des Obergurtes ausgestattet ist. In konstruktiver Hinsicht ist es vorteilhaft, diese Zentriervorrichtung für den Obergurt ebenfalls auf dem bereits mehrfach erwähnten höhenverstellbaren Träger anzuordnen.

Das erfindungsgemäße Verfahren kann weiterhin durch einen oder mehrere der folgenden Schritte erweitert und auf diese Weise in einen größeren Gesamtzusammenhang eingeordnet werden:
- Der wenigstens eine Untergurt und/oder der Obergurt und/oder der wenigstens eine Diagonalgurt wird vor der Verschweißung zu einem Gitterträger zuerst von Spulen abgewickelt und anschließend in einer vorbestimmten Weise verformt, wobei diese Verformung bei dem wenigstens einen Untergurt und/oder dem Obergurt darin besteht, dass diese Gurte zu geraden Stäben verformt werden, wohingegen der wenigstens eine Diagonalgurt im Zuge dieses Verfahrensschrittes eine vorbestimmte Zickzackform erhält.
- Der Gitterträger wird in vorbestimmten Schnittpositionen vom kontinuierlich hergestellten Materialstrang abgetrennt.
- Der Gitterträger wird anschließend wenigstens einer Lagerstätte zugeführt.

Zur Durchführung dieser drei Verfahrensschritte umfasst die entsprechende erfindungsgemäße Einrichtung vorzugsweise:
- Eine Abspulvorrichtung für Spulen, auf denen der wenigstens eine Untergurt und/oder der Obergurt und/oder der wenigstens eine Diagonalgurt aufgewickelt sind;
- eine Richtmaschine für den wenigstens einen Untergurt und/oder den Obergurt und/oder eine Biegemaschine für den wenigstens einen Diagonalgurt;
- eine Lagerstätte zur Lagerung des Gitterträgers und
- eine Robotervorrichtung zum Transport des Gitterträgers zu dieser Lagerstätte.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine stark vereinfachte schematisch dargestellte Gesamtübersicht eines bevorzugten Ausführungsbeispiels des erfindungsgemäßen Verfahrens bzw. der erfindungsgemäßen Einrichtung zur kontinuierlichen Herstellung eines Gitterträgers,
- Fig. 2: eine schematische Seitenansicht der Schweißmaschine,
- Fig. 3a und 3b: zwei schematische Seitenansichten der Schweißmaschine zur Illustration des schrittweisen Vorschubs des Obergurtes und der beiden Untergurte,
- Fig. 4a bis 4f: eine Abfolge von sechs schematischen Seitenansichten der Schweißmaschine zur Illustration des Ablaufs zur Vergrößerung der Höhe des Obergurts zur Untergurtanordnung während der kontinuierlichen Herstellung des Gitterträgers,
- Fig. 5a bis 5f: eine Abfolge von sechs schematischen Seitendarstellungen der Schweißmaschine zur Illustration des Ablaufs zur Verkleinerung der Höhe des Obergurts zur Untergurtanordnung während der kontinuierlichen Herstellung des Gitterträgers,
- Fig. 6a und 6b: zwei schematische Seitenansichten der Untergurt-Schweißvorrichtung zur Illustration der Änderung der Winkellage dieser Schweißvorrichtung im Rahmen der Änderung der Höhe des Obergurtes zur Untergurtanordnung,
- Fig. 7a und 7b: zwei schematische Seitenansichten der Obergurt-Schweißvorrichtung zur Illustration der Änderung der Höhe und der Winkellage dieser Schweißvorrichtung im Rahmen der Änderung der Höhe des Obergurtes zur Untergurtanordnung und
- Fig. 8: eine schematische Seitenansicht eines weiteren bevorzugten Ausführungsbeispiels einer erfindungsgemäßen Einrichtung zur Herstellung eines Gitterträgers.

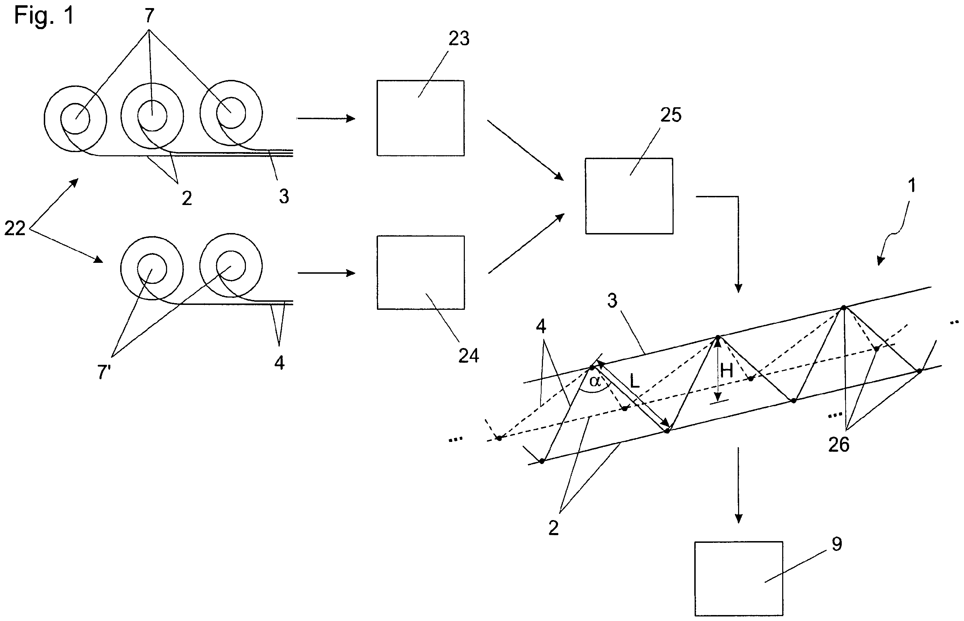

In der Fig. 1 ist stark vereinfacht eine Gesamtübersicht eines bevorzugten Ausführungsbeispiels des erfindungsgemäßen Verfahrens bzw. der erfindungsgemäßen Einrichtung zur kontinuierlichen Herstellung eines Gitterträgers 1 schematisch dargestellt. Der Gitterträger 1 besteht in diesem Fall aus einer Untergurtanordnung, die zwei Untergurte 2 umfasst, einem in einer bestimmten Höhe H zur Untergurtanordnung angeordneten Obergurt 3 und zwei zwischen den beiden Untergurten 2 und dem Obergurt 3 zickzackförmig hin- und herverlaufenden Diagonalgurten 4, wobei die beiden Untergurte 2 und der Obergurt 3 mit den beiden Diagonalgurten 4 verschweißt sind. Die entsprechenden punktförmigen Verschweißungsstellen sind mit dem Bezugszeichen 26 versehen.

Zur Herstellung eines solchen Gitterträgers 1 werden der Obergurt 3, die beiden Untergurte 2 sowie die beiden Diagonalgurte 4 zunächst in einer Abspulvorrichtung 22 von Spulen 7 und 7' abgewickelt. Auf diesen Spulen 7 und 7' werden die Gurte 2, 3 und 4 in Form von aufgewickelten Stahldrähten dem Gitterträgerhersteller geliefert. Je nach Art des herzustellenden Gitterträgertyps können die Stahldrähte unterschiedliche Durchmesser und/oder unterschiedliche Oberflächenbeschaffenheiten (profiliert, gerippt oder glatt) aufweisen.

Im Anschluss an das Abwickeln von den Spulen 7 und 7' werden die Untergurte 2 und der Obergurt 3 einer Richtmaschine 23 und die beiden Diagonalgurte 4 einer Biegemaschine 24 zugeführt. In der Richtmaschine werden die Untergurte 2 und der Obergurt 3 im Wesentlichen zu geraden Stäben verformt, während die beiden Diagonalgurte 4 in der Biegemaschine 24 eine vorbestimmte Zickzackform erhalten. Dabei sind die Längen L der einzelnen Schenkel dieser Zickzackform bzw. der Biegewinkel α zwischen den Schenkeln frei wählbar.

Im Anschluss an die Richtmaschine 23 bzw. die Biegemaschine 24 werden die Untergurte 2 und der Obergurt 3 bzw. die beiden Diagonalgurte 4 der Schweißmaschine 25 zugeführt, in welcher die eigentliche Herstellung des Gitterträgers 1 durch Verschweißen der beiden Untergurte 2 und des Obergurtes 3 mit den beiden Diagonalgurten 4 mittels einer Untergurt-Schweißvorrichtung und einer Obergurt-Schweißvorrichtung (in dieser Zeichnung nicht zu sehen) erfolgt. Nach ihrer Herstellung werden die Gitterträger 1 mit Hilfe einer Robotervorrichtung in eine Lagerstätte 9 transportiert und dort abgelegt.

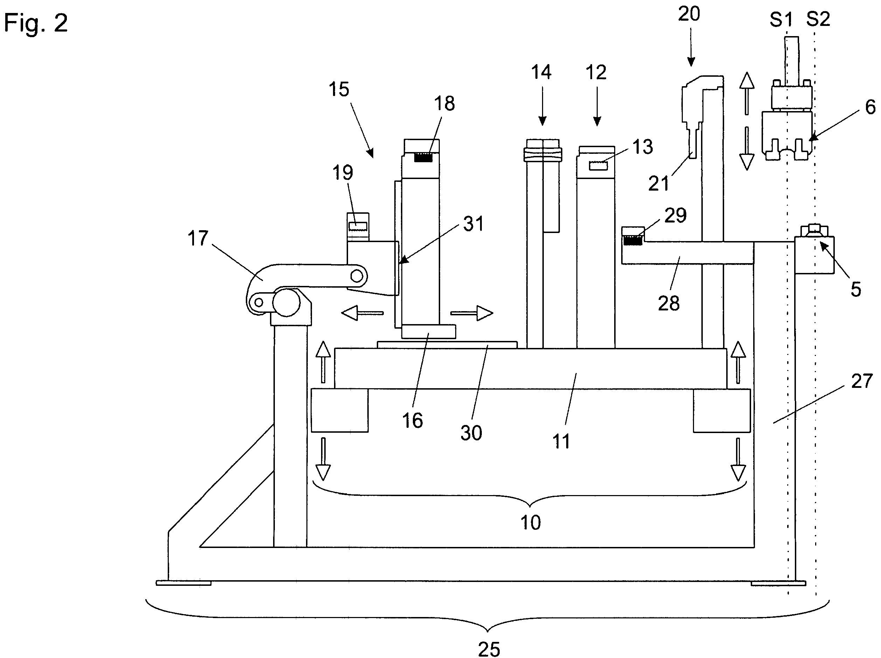

Fig. 2 zeigt eine schematische Seitenansicht der Schweißmaschine 25. Dargestellt sind die für das wesentliche Verständnis der Funktionsweise des bevorzugten Ausführungsbeispiels erforderlichen Komponenten dieser Schweißmaschine 25. Zentraler Bestandteil ist eine Vorrichtung 10 zur Höhenverstellung des Obergurtes in Form eines höhenverstellbaren Trägers 11, auf dem eine Haltevorrichtung 12 für den Obergurt angeordnet ist. Diese Haltevorrichtung 12 umfasst eine Zange 13 zur lösbaren Befestigung des Obergurtes. Diese Zange 13 hat zwei Betriebszustände: Einen geöffneten Zustand, in welchem der Obergurt nicht festgehalten wird, und einen geschlossenen Zustand, in welchem der Obergurt an eine Gegenfläche gedrückt und auf diese Weise fixiert wird. Diese beiden Betriebszustände sind in dieser und in den übrigen Zeichnungen dadurch kenntlich gemacht, dass die Zange 13 im geschlossenen Zustand mit einer schwarzen Farbe ausgefüllt ist und im geöffneten Zustand keine Füllung aufweist. Der Mechanismus zur Höhenverstellung des höhenverstellbaren Trägers 11 ist in dieser Zeichnung der Übersichtlichkeit halber nicht dargestellt. Es kann sich hierbei beispielsweise um einen Kettenantrieb handeln, der an dem Rahmen 27 der Schweißmaschine 25 montiert ist.

Auf dem höhenverstellbaren Träger 11 ist weiterhin eine Schneidevorrichtung 14 zum Zerschneiden des Obergurtes sowie eine Vorschubvorrichtung 15 zur schrittweisen Zufuhr des Obergurtes und der beiden Untergurte zur Obergurt-Schweißvorrichtung 6 bzw. zur Untergurt-Schweißvorrichtung 5 (welche in der Zeichnung rechts oben zu sehen sind) angeordnet. Diese Vorschubvorrichtung 15 kann über einen Linearschlitten 16 und eine korrespondierende Führungsschiene 30 mit Hilfe eines Exzenterhebels 17, der an dem Rahmen 27 der Schweißmaschine 25 befestigt ist, nach rechts und links bewegt werden. Die Vorschubvorrichtung 15 umfasst eine Zange 18 zur lösbaren Befestigung des Obergurtes und zwei Zangen 19 zur lösbaren Befestigung der beiden Untergurte, wobei in dieser Zeichnung (aufgrund der Seitendarstellung) nur eine der Untergurtzangen 19 sichtbar ist. Da die Höhe des Obergurtes zur Untergurtanordnung während der kontinuierlichen Herstellung des Gitterträgers änderbar sein soll, ist die Zange 18 des Obergurtes, welche an der Vorschubvorrichtung 15 befestigt ist, nicht nur in der horizontalen Ebene verstellbar sondern auch höhenverstellbar. Im Vergleich dazu ist es nicht vorgesehen, die Höhe der beiden Untergurte zu ändern. Das bedeutet, dass zwischen dem Bauteil, auf welchem die beiden Untergurtzangen 19 angeordnet sind, und dem Bauteil, auf welchem die Obergurtzange 18 angeordnet ist, eine Vorrichtung 31 zum Höhenausgleich vorgesehen sein muss. Dieser Höhenausgleich erfolgt in dem hier dargestellten Ausführungsbeispiel mit Hilfe von Schienen. Allgemein sei noch angemerkt, dass die Zangen 18 und 19 genauso wie die an der Haltevorrichtung 12 für den Obergurt angeordnete Zange 13 funktioniert. Die beiden möglichen Betriebszustände werden in gleicher Weise angezeigt.

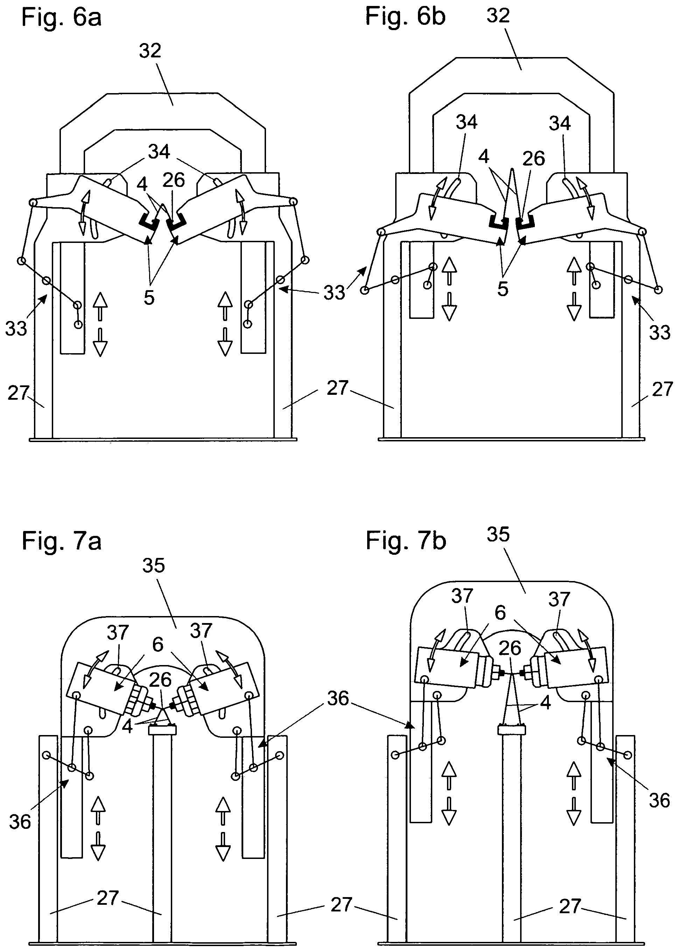

Schließlich ist auf dem höhenverstellbaren Träger 11 noch eine Zentriervorrichtung 20 angeordnet, mit deren Hilfe der Obergurt - bevor er der Obergurt-Schweißvorrichtung 6 zugeführt wird - zentriert werden kann. Diese Zentriervorrichtung 20 weist ebenfalls eine Zange 21 zur lösbaren Befestigung des Obergurtes auf. Ortsfest mit dem Rahmen 27 der Schweißmaschine 25 verbunden ist eine Haltevorrichtung 28 für die beiden Untergurte, an der zwei weitere Zangen 29 (für die das gleiche wie für die übrigen Zangen 13, 18 und 19 gilt) angeordnet sind. Es sei noch darauf hingewiesen, dass die Obergurt-Schweißvorrichtung 6 höhenverstellbar ist, was durch die beiden Pfeile angedeutet ist. Das genaue Wirkungsprinzip dieser Höhenverstellung sei genauso wie die Änderung der Winkellage der Obergurt-Schweißvorrichtung 6 sowie der Untergurt-Schweißvorrichtung 5 anhand der Fig. 6a und 6b sowie 7a und 7b im Einzelnen erläutert.

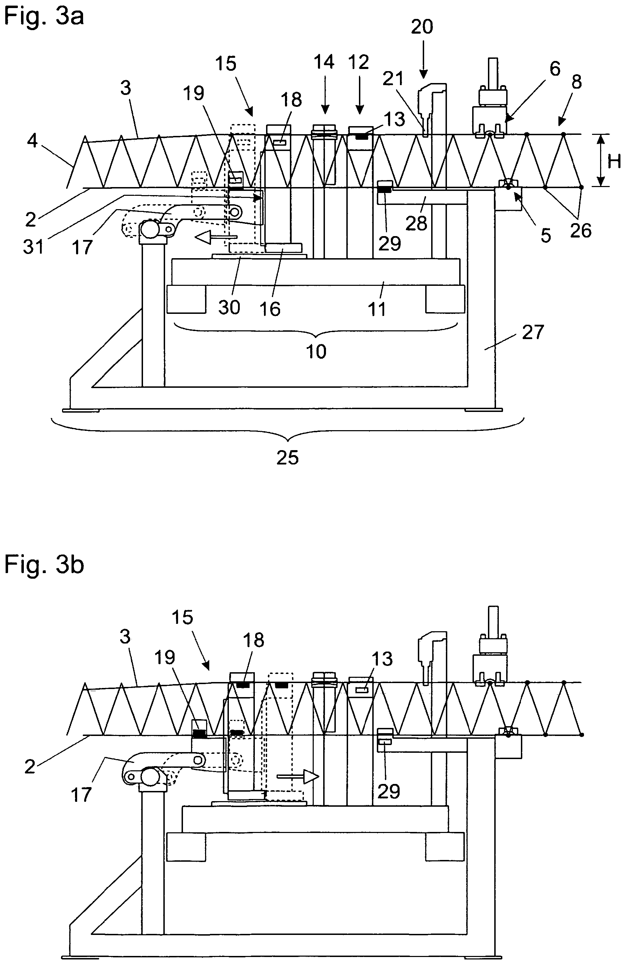

Die Fig. 3a und 3b dienen der Veranschaulichung der Funktionsweise des schrittweisen Vorschubs, mit dessen Hilfe der Obergurt 3 und die beiden Untergurte 2 der Obergurt-Schweißvorrichtung 6 bzw. der Untergurt-Schweißvorrichtung 5 zugeführt werden. Es handelt sich im Prinzip um die gleiche Seitenansicht der Schweißmaschine 25 wie in der Fig. 2. Zusätzlich ist der Gitterträger zu sehen. Es sei darauf hingewiesen, dass in der Fig. 3b nur die für das Verständnis relevanten Komponenten der Schweißmaschine 25 mit Bezugszeichen versehen sind. Die Bezugszeichen der übrigen Komponenten können der Fig. 3a entnommen werden. Der schrittweise Vorschub in horizontale Richtung (in diesem Ausführungsbeispiel mit einer Schrittweite von 200 mm) findet folgendermaßen statt: Als erstes werden die Zangen 13 und 29 der Haltevorrichtungen 12 bzw. 28 für den Obergurt 3 bzw. die beiden Untergurte 2 geschlossen. Dadurch werden diese Gurte 2 und 3 in ihrer Position fixiert.

Anschließend werden die Zangen 18 und 19, welche an der Vorschubvorrichtung 15 angeordnet sind, geöffnet, und die Vorschubvorrichtung 15 wird über den Exzenterhebel 17 nach links bewegt. In einem weiteren Schritt (der in der Fig. 3b dargestellt ist) werden die Zangen 13 und 29 geöffnet, die Zangen 18 und 19 geschlossen, und die Vorschubrichtung 15 wird über den Exzenterhebel 17 nach rechts bewegt. Dadurch, dass die Gurte 2 und 3 an den Zangen 18 bzw. 19 festgeklemmt sind und die Gurte 2 und 3 untereinander mit den beiden Diagonalgurten 4 hinter der Schweißlinie verschweißt sind, bewegt sich der gesamte Gitterträger nach rechts.

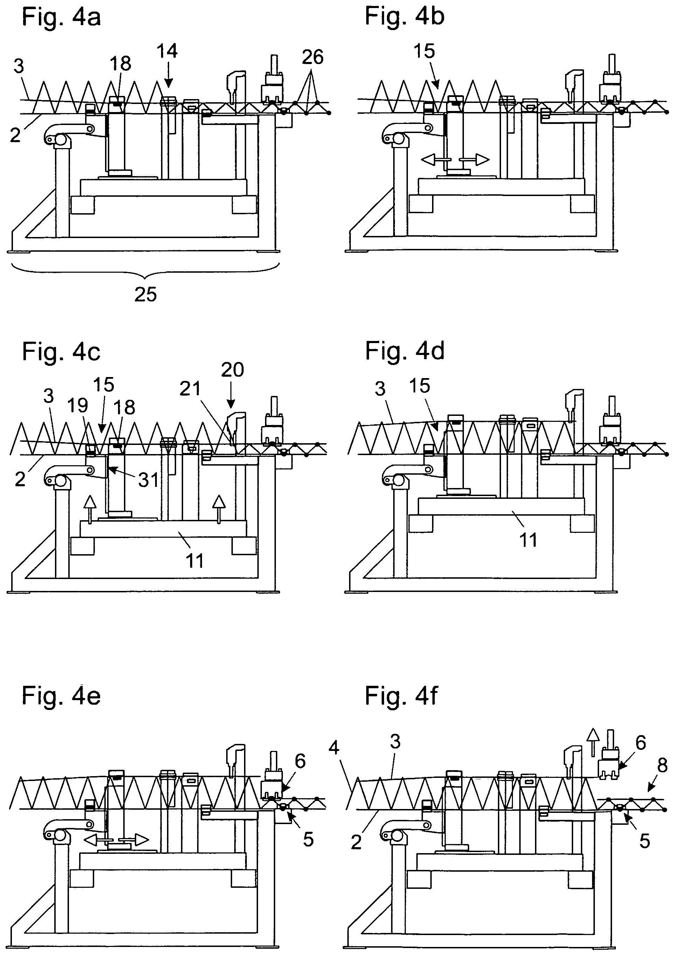

Die Abfolge der in den Fig. 4a bis 4f dargestellten Bilder dient der Veranschaulichung der Vergrößerung der Höhe des Obergurtes 3 zur Untergurtanordnung während der kontinuierlichen Herstellung des Gitterträgers. Es handelt sich im Prinzip um die gleiche schematische Seitenansicht der Schweißmaschine 25, die auch in den Fig. 2, 3a und 3b zu sehen ist. Daher sind in diesen sechs Darstellungen auch nur die für das Verständnis relevanten Komponenten mit Bezugszeichen versehen. Die Bezugszeichen der übrigen Komponenten können den Fig. 2 oder 3a entnommen werden. Die Änderung der Höhe des Obergurtes 3 zur Untergurtanordnung während der kontinuierlichen Herstellung des Gitterträgers von einer kleinen Höhe auf eine größere Höhe findet im Einzelnen wie folgt statt: An einem bestimmten Zeitpunkt während der Verschweißung der beiden Untergurte 2 bzw. des Obergurtes 3 mit den beiden Diagonalgurten 4 wird der Obergurt 3 mit Hilfe der Schneidevorrichtung 14 an einer vorbestimmten Schnittposition zerschnitten. Der in der Zeichnung 4a rechte Teil des zerschnittenen Obergurtes 3 wird durch die bereits vorgenommenen Verschweißungen 26 in Position gehalten, während der in der Figur linke Teil des zerschnittenen Obergurtes 3 mit Hilfe der geschlossenen Zange 18 festgehalten wird.

Im Anschluss an das Zerschneiden des Obergurtes 3 wird der Gitterträger schrittweise nach rechts transportiert, wobei der Vorschub mit Hilfe der Vorschubvorrichtung 15 auf die anhand der Fig. 3a und 3b erläuterten Weise erfolgt (siehe Fig. 4b). Dieser schrittweise Vorschub erfolgt so lange, bis die Stelle, an welcher der Obergurt zerschnitten wurde, die Zentriervorrichtung 20 für den Obergurt erreicht hat (siehe Fig. 4c). Das bedeutet, dass die Zange 21 dieser Zentriervorrichtung 20 das Ende des linken Teils des zerschnittenen Obergurtes 3 fixieren kann. Auf diese Weise wird dieser Teil des Obergurtes 3 stabil zwischen den beiden Zangen 18 und 21 festgehalten und kann in weiterer Folge durch eine Aufwärtsbewegung des höhenverstellbaren Trägers 11 nach oben bewegt werden (was durch die beiden nach oben zeigenden Pfeile angedeutet ist). Die beiden Untergurte 2 verbleiben in der ursprünglichen Position. Dem geänderten Abstand der beiden Zangen 18 und 19 an der Vorschubvorrichtung 15 wird mit Hilfe der Vorrichtung 31 zum Höhenausgleich Rechnung getragen.

Die Endposition der Aufwärtsbewegung des höhenverstellbaren Trägers 11 ist in der Fig. 4d zu sehen. Nach Erreichen dieser Endposition wird der Gitterträger weiter schrittweise nach rechts bewegt (wobei der schrittweise Vorschub wieder mit Hilfe der Vorschubvorrichtung 15 auf die vorbeschriebene Weise erfolgt), und zwar so lange, bis das Ende des rechten Teils des zerschnittenen Obergurtes 3 vollständig verschweißt ist, d.h. bis die Höhenwechselposition die Untergurt-Schweißvorrichtung 5 bzw. die Obergurt-Schweißvorrichtung 6 erreicht hat (siehe Fig. 4e).

In einem letzten Schritt (der in der Fig. 4f zu sehen ist) muss noch die Obergurt-Schweißvorrichtung 6 nach oben bewegt werden, damit die Verschweißung des linken Teils des zerschnittenen Obergurtes 3 mit den Diagonalgurten auf der neuen (größeren) Höhe vorgenommen werden kann.

Abschließend sei noch auf folgende Punkte hingewiesen:
- Nach Erreichen der neuen Höhe des Obergurtes 3 zur Untergurt-Anordnung wird gegebenenfalls auch die Winkellage der Obergurt-Schweißvorrichtung 6 bzw. der Untergurt-Schweißvorrichtung 5 angepasst.
- Die Zufuhr der beiden Diagonalgurte 4 erfolgt im Gegensatz zur Zufuhr der Untergurten 2 bzw. des Obergurtes 3 nicht schrittweise sondern kontinuierlich. Die entsprechende Vorrichtung für diese kontinuierliche Zufuhr von der Biegemaschine zur Schweißmaschine ist in den Zeichnungen nicht dargestellt. Die Länge der Schenkel der zickzackförmigen Diagonalgurte 4 wird automatisch während der Höhenverstellung des Obergurtes 3 an die neue Höhe angepasst.
- Nachdem der rechte Teil des zerschnittenen Obergurtes 3 vollständig verschweißt ist, wird der entsprechende Gitterträger mit der kleineren Höhe an der Höhenwechselposition von dem kontinuierlich hergestellten Materialstrang 8 abgetrennt. Hierfür ist eine Trennvorrichtung vorgesehen, die in den Zeichnungen nicht zu sehen ist.

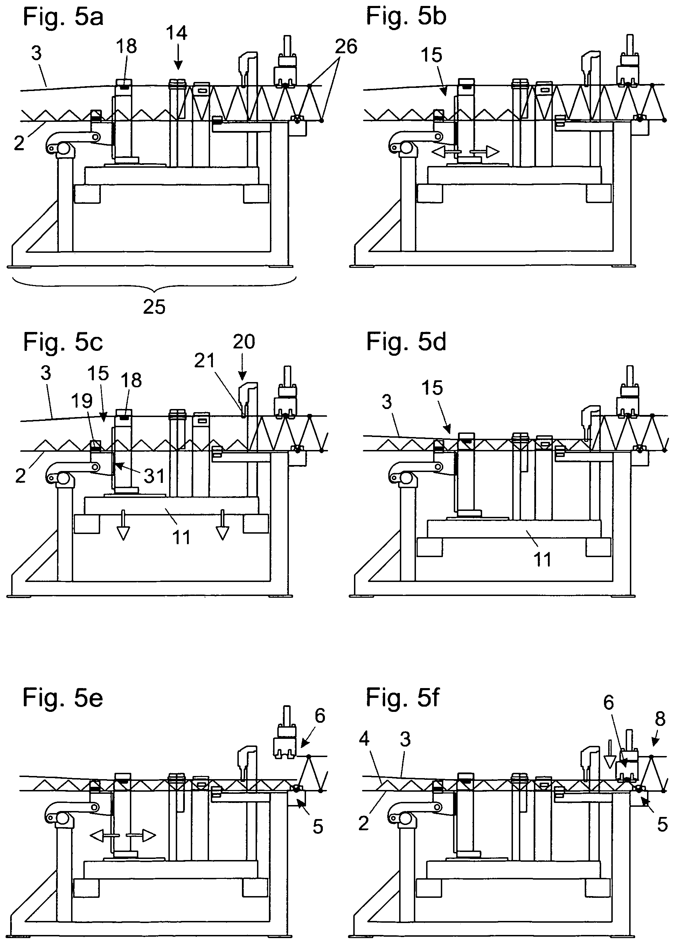

Die Abfolge der in den Fig. 5a bis 5f zu sehenden sechs Bilder der Schweißmaschine 25 dienen (im Vergleich zu den Fig. 4a bis 4f) der Veranschaulichung des umgekehrten Prozesses, d.h. der Verkleinerung der Höhe des Obergurtes 3 zur Untergurtanordnung während der kontinuierlichen Herstellung des Gitterträgers. Sie findet in analoger Weise statt und muss daher nicht näher erläutert werden.

In den Fig. 6a und 6b bzw. in den Fig. 7a und 7b ist schematisch eine Seitenansicht der Untergurt-Schweißvorrichtung 5 bzw. der Obergurt-Schweißvorrichtung 6 zu sehen. Es handelt sich um eine im Vergleich zu den Fig. 2 bis 5f um 90 Grad gedrehte Seitenansicht. Die entsprechenden Schnittebenen sind in der Fig. 2 mit dem Bezugszeichen S1 und S2 versehen. Durch die in beiden Fällen vorliegende Gegenüberstellung zweier Abbildungen ist ersichtlich, wie die Winkellage der Untergurt-Schweißvorrichtung 5 bzw. die Höhe und die Winkellage der Obergurt-Schweißvorrichtung 6 im Rahmen der Änderung der Höhe zur Untergurtanordnung geändert werden kann. Sie erfolgt in beiden Fällen mit Hilfe eines höhenverstellbaren Bügels 32 bzw. 35, eines speziell ausgeformten Hebelmechanismus 33 bzw. 36 und einer gebogenen Führungskontur 34 bzw. 37.

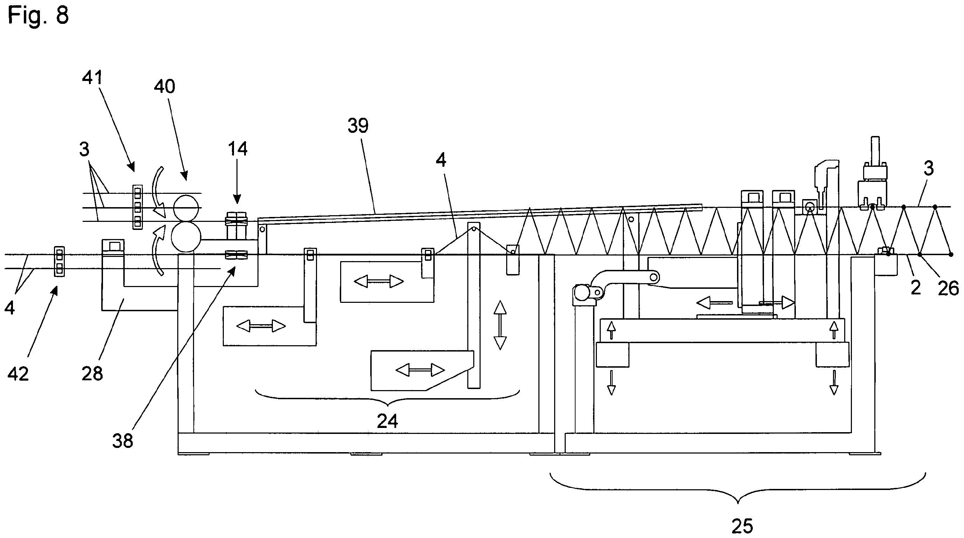

Fig. 8 zeigt eine schematisch dargestellte Seitenansicht eines weiteren bevorzugten Ausführungsbeispiels der erfindungsgemäßen Einrichtung zur Herstellung eines Gitterträgers. Der rechte Teil der Einrichtung entspricht im Wesentlichen der Schweißmaschine 25, deren Aufbau und Wirkungsweise in Zusammenhang mit den vorangehenden Figuren beschrieben wurde. Ein Unterschied besteht jedoch darin, dass die Schweißmaschine 25 nicht die Schneidevorrichtung 14 für den Obergurt 3 umfasst. Diese ist nun im linken Teil der Einrichtung angeordnet. Genauer gesagt ist sie zwischen einer Drahtwechselvorrichtung 41 bzw. einer Vorschubvorrichtung 40 für den Obergurt 3 und einer Vorrichtung 39 zur Drahtführung des Obergurtes 3 angeordnet. Die Vorschubvorrichtung 40 besteht im Wesentlichen aus zwei sich gegenläufig drehenden Rollen, zwischen denen der Obergurt 3 eingeklemmt ist. Die Vorrichtung 39 zur Drahtführung des Obergurtes 3 besteht im Wesentlichen aus einer Röhre, die an einer ersten und einer zweiten Stelle gelagert ist, wobei die Höhe der zweiten Lagerstelle zusammen mit der Höhe des höhenverstellbaren Trägers 11 (vgl. z.B. Fig. 2) veränderbar ist. Die Schneidevorrichtung 14 ist einer mittleren Höhe in Bezug auf die Untergurte 2 angeordnet. Aus dieser Höhe kann der zu verschweißende Obergurt 3 mittels der Vorrichtung 39 in jede gewünschte Höhe in Bezug auf die Untergurte 2 befördert werden.

Der linke Teil der Einrichtung umfasst weiterhin eine Drahtwechselvorrichtung 42, eine Schneidevorrichtung 38 sowie eine Biegemaschine 24. Sie dienen der Verarbeitung der Diagonalgurte 4. Die Diagonalgurte 4 und die Untergurte 2 werden in der gleichen Höhe dem Produktionsprozess zugeführt, so dass sie sich - da es sich bei der Fig. 8 um eine Seitenansicht handelt - zu überlagern scheinen. Dies ist in der Realität nicht der Fall.

In den Drahtwechselvorrichtungen 41 bzw. 42 können Obergurte bzw. Diagonalgurte mit unterschiedlichen Drahtdurchmessern gelagert werden. Auf diese Weise ist es möglich, nicht nur die Höhe des Obergurtes zur Untergurtanordnung, sondern auch den Drahtdurchmesser des Obergurtes 3 bzw. der Diagonalgurte 4 flexibel während des Herstellungsprozesses zu verändern.

**Bezugszeichenliste:**

| | | | |
|---|---|---|---|
| 1 | Gitterträger | 24 | Biegemaschine |
| 2 | Untergurte | 25 | Schweißmaschine |
| 3 | Obergurt | 26 | Verschweißungsstellen |
| 4 | Diagonalgurte | 27 | Rahmen |
| 5 | Untergurt-Schweißvorrichtung | 28 | Haltevorrichtung (Untergurt) |
| 6 | Obergurt-Schweißvorrichtung | 29 | Zange (Untergurt) |
| 7 | Spulen (Untergurte und Obergurt) | 30 | Führungsschiene |
| 7' | Spulen (Diagonalgurte) | 31 | Vorrichtung zum Höhenausgleich |
| 8 | Materialstrang | 32 | Höhenverstellbarer Bügel |
| 9 | Lagerstätte | 33 | Hebelmechanismus |
| 10 | Vorrichtung zur Höhenverstellung (Obergurt) | 34 | Führungskontur |
| 11 | Höhenverstellbarer Träger | 35 | Höhenverstellbarer Bügel |
| 12 | Haltevorrichtung (Obergurt) | 36 | Hebelmechanismus |
| 13 | Zange (Obergurt) | 37 | Führungskontur |
| 14 | Schneidevorrichtung (Obergurt) | 38 | Schneidevorrichtung (Diagonalgurte) |
| 15 | Vorschubvorrichtung (Untergurte und Obergurt) | 39 | Vorrichtung zur Drahtführung (Obergurt) |
| 16 | Linearschlitten | 40 | Vorschubvorrichtung (Obergurt) |
| 17 | Exzenterhebel | 41 | Drahtwechselvorrichtung (Obergurt) |
| 18 | Zange (Obergurt) | 42 | Drahtwechselvorrichtung (Diagonalgurte) |
| 19 | Zange (Untergurt) | H | Höhe des Obergurtes zur Untergurtanordnung |
| 20 | Zentriervorrichtung (Obergurt) | L | Längen der Schenkel der Zickzackform der Diagonalgurte |
| 21 | Zange (Obergurt) | α | Biegewinkel zwischen den Schenkeln der Zickzackform der Diagonalgurte |
| 22 | Abspulvorrichtung | S1 | Querschnittsebene 1 |
| 23 | Richtmaschine | S2 | Querschnittsebene 2 |

## Patentansprüche

1. Verfahren zur kontinuierlichen Herstellung eines Gitterträgers (1) unter Verschweißen einer Untergurtanordnung, die wenigstens einen Untergurt (2), insbesondere zwei Untergurte (2), umfasst, und eines in einer bestimmten Höhe (H) zur Untergurtanordnung angeordneten Obergurtes (3) mit wenigstens einem zwischen dem wenigstens einen Untergurt (2) und dem Obergurt (3), insbesondere zickzackförmig, hin- und herverlaufenden Diagonalgurt (4), wobei das Verschweißen des wenigstens einen Untergurtes (2) und des Obergurtes (3) mit dem wenigstens einen Diagonalgurt (4) mittels einer Untergurt-Schweißvorrichtung (5) und einer Obergurt-Schweißvorrichtung (6) erfolgt, **dadurch gekennzeichnet, dass** die Höhe (H) des Obergurtes (3) zur Untergurtanordnung während der kontinuierlichen Herstellung des Gitterträgers (1) geändert wird, wobei der Obergurt (3) vor einer Änderung seiner Höhe (H) zur Untergurtanordnung zerschnitten wird.

2. Verfahren nach Anspruch 1, **dadurch gekennzeichnet, dass** die Winkellage der Untergurt-Schweißvorrichtung (5) im Rahmen der Änderung der Höhe (H) des Obergurtes (3) zur Untergurtanordnung geändert wird.

3. Verfahren nach Anspruch 1 oder 2, **dadurch gekennzeichnet, dass** die Höhe und/oder die Winkellage der Obergurt-Schweißvorrichtung (6) im Rahmen der Änderung der Höhe (H) des Obergurtes (3) zur Untergurtanordnung geändert wird.

4. Verfahren nach einem der Ansprüche 1 bis 3, **dadurch gekennzeichnet, dass** der Obergurt (3) und/oder der wenigstens eine Untergurt (2) schrittweise der Obergurt-Schweißvorrichtung (6) bzw. der Untergurt-Schweißvorrichtung (5) zugeführt wird.

5. Verfahren nach einem der Ansprüche 1 bis 4, **dadurch gekennzeichnet, dass** der Obergurt (3), bevor er der Obergurt-Schweißvorrichtung (6) zugeführt wird, zentriert wird.

6. Verfahren nach einem der Ansprüche 1 bis 5, **dadurch gekennzeichnet, dass** der wenigstens eine Untergurt (2) und/oder der Obergurt (3) und/oder der wenigstens eine Diagonalgurt (4) vor der Verschweißung zu einem Gitterträger (1) zuerst von Spulen (7,7') abgewickelt und anschließend in einer vorbestimmten Weise verformt werden.

7. Verfahren nach einem der Ansprüche 1 bis 6, **dadurch gekennzeichnet, dass** der Gitterträger (1) in vorbestimmten Schnittpositionen vom kontinuierlich hergestellten Materialstrang (8) abgetrennt wird, und vorzugsweise, dass der Gitterträger (1) anschließend wenigstens einer Lagerstätte (9) zugeführt wird.

8. Einrichtung zur kontinuierlichen Herstellung eines Gitterträgers (1) aus einer Untergurtanordnung, die wenigstens einen Untergurt (2), insbesondere zwei Untergurte (2), umfasst, einem in einer bestimmten Höhe (H) zur Untergurtanordnung angeordneten Obergurt (3) und wenigstens einem zwischen dem wenigstens einen Untergurt (2) und dem Obergurt (3), insbesondere zickzackförmig, hin- und herverlaufenden Diagonalgurt (4), wobei der wenigstens eine Untergurt (2) und der Obergurt (3) mit dem wenigstens einen Diagonalgurt (4) verschweißt sind und die Einrichtung für diese Verschweißung eine Untergurt-Schweißvorrichtung (5) und eine Obergurt-Schweißvorrichtung (6) umfasst, wobei die Einrichtung weiterhin eine Schneidevorrichtung (14) zum Zerschneiden des Obergurtes (3) umfasst, **dadurch gekennzeichnet, dass** die Einrichtung weiters eine Vorrichtung (10) zur Höhenverstellung des Obergurtes (3) während der kontinuierlichen Herstellung des Gitterträgers (1) umfasst.

9. Einrichtung nach Anspruch 8, **dadurch gekennzeichnet, dass** es sich bei der Vorrichtung (10) zur Höhenverstellung des Obergurtes (3) um einen höhenverstellbaren Träger (11), auf dem eine Haltevorrichtung (12) für den Obergurt (3) angeordnet ist, handelt, und vorzugsweise, dass die Haltevorrichtung (12) eine Zange (13) zur lösbaren Befestigung des Obergurtes (3) umfasst.

10. Einrichtung nach Anspruch 8 oder 9, wobei es sich bei der Vorrichtung (10) zur Höhenverstellung des Obergurtes (3) um einen höhenverstellbaren Träger (11) handelt, **dadurch gekennzeichnet, dass** die Schneidevorrichtung (14) auf dem höhenverstellbaren Träger (11) angeordnet ist.

11. Einrichtung nach einem der Ansprüche 8 bis 10, **dadurch gekennzeichnet, dass** die Einrichtung weiters eine Vorrichtung (32, 33, 34) zum Verstellen der Winkellage der Untergurt-Schweißvorrichtung (5) umfasst, und/oder dass die Einrichtung weiters eine Vorrichtung (35, 36, 37) zum Verstellen der Höhe und/oder der Winkellage der Obergurt-Schweißvorrichtung (6) umfasst.

12. Einrichtung nach einem der Ansprüche 8 bis 11, **dadurch gekennzeichnet, dass** die Einrichtung weiters eine Vorschubvorrichtung (15) zur schrittweisen Zufuhr des Obergurtes (3) und/oder des wenigstens einen Untergurtes (2) zur Obergurt-Schweißvorrichtung (6) bzw. Untergurt-Schweißvorrichtung (5) umfasst.

13. Einrichtung nach Anspruch 12, **dadurch gekennzeichnet, dass** die Vorschubvorrichtung (15) auf einem Linearschlitten (16) angeordnet ist.

14. Einrichtung nach Anspruch 12 oder 13, **dadurch gekennzeichnet, dass** die Vorschubvorrichtung (15) über einen Exzenterhebel (17) bewegbar ist, und/oder dass die Vorschubvorrichtung (15) eine Zange (18) zur lösbaren Befestigung des Obergurtes (3) und/oder eine Zange (19) zur lösbaren Befestigung des wenigstens einen Untergurtes (2) umfasst.

15. Einrichtung nach einem der Ansprüche 12 bis 14, wobei es sich bei der Vorrichtung (10) zur Höhenverstellung des Obergurtes (3) um einen höhenverstellbaren Träger (11) handelt, **dadurch gekennzeichnet, dass** die Vorschubvorrichtung (15) auf dem höhenverstellbaren Träger (11) angeordnet ist.

16. Einrichtung nach einem der Ansprüche 8 bis 15, **dadurch gekennzeichnet, dass** die Einrichtung weiters eine Zentriervorrichtung (20) für den Obergurt (3) umfasst, und vorzugsweise, dass die Zentriervorrichtung (20) eine Zange (21) zur lösbaren Befestigung des Obergurtes (3) aufweist.

17. Einrichtung nach Anspruch 16, wobei es sich bei der Vorrichtung (10) zur Höhenverstellung des Obergurtes (3) um einen höhenverstellbaren Träger (11) handelt, **dadurch gekennzeichnet, dass** die Zentriervorrichtung (20) auf dem höhenverstellbaren Träger (11) angeordnet ist.

18. Einrichtung nach einem der Ansprüche 8 bis 17, **dadurch gekennzeichnet, dass** die Einrichtung eine Abspulvorrichtung (22) für Spulen (7,7'), auf denen der wenigstens eine Untergurt (2) und/oder der Obergurt (3) und/oder der wenigstens eine Diagonalgurt (4) aufgewickelt sind, umfasst, und vorzugsweise, dass die Einrichtung weiters eine Richtmaschine (23) für den wenigstens einen Untergurt (2) und/oder den Obergurt (3) und/oder eine Biegemaschine (24) für den wenigstens einen Diagonalgurt (4) umfasst.

19. Einrichtung nach einem der Ansprüche 8 bis 18, **dadurch gekennzeichnet, dass** die Einrichtung eine Trennvorrichtung zum Abtrennen des Gitterträgers (1) vom kontinuierlich hergestellten Materialstrang (8) umfasst.

20. Einrichtung nach einem der Ansprüche 8 bis 19, **dadurch gekennzeichnet, dass** die Einrichtung wenigstens eine Lagerstätte (9) zur Lagerung des Gitterträgers (1) umfasst, und vorzugsweise, dass die Einrichtung eine Robotervorrichtung zum Transport des Gitterträgers (1) zur Lagerstätte (9) umfasst.

## Claims

1. A method of continuously producing a lattice girder (1) by welding a lower chord arrangement which includes at least one lower chord (2), in particular two lower chords (2), and an upper chord (3) which is arranged at a specific height (H) in relation to the lower chord arrangement to at least one diagonal member (4) which extends back and forth between the at least one lower chord (2) and the upper chord (3), in particular in a zig-zag form, wherein welding of the at least one lower chord (2) and the upper chord (3) to the at least one diagonal member (4) is effected by means of a lower chord welding device (5) and an upper chord welding device (6), **characterised in that** the height (H) of the upper chord (3) relative to the lower chord arrangement is changed during the continuous production of the lattice girder (1), wherein the upper chord (3) is cut prior to a change in its height (H) relative to the lower chord arrangement.

2. The method as set forth in claim 1, **characterised in that** the angle position of the lower chord welding device (5) is changed in the course of the change in the height (H) of the upper chord (3) relative to the lower chord arrangement.

3. The method as set forth in claim 1 or 2, **characterised in that** the height and/or the angle position of the upper chord welding device (6) is changed in the course of the change in the height (H) of the upper chord (3) relative to the lower chord arrangement.

4. The method as set forth in one of claims 1 through 3, **characterised in that** the upper chord (3) and/or the at least one lower chord (2) is fed stepwise to the upper chord welding device (6) and the lower chord welding device (5) respectively.

5. The method as set forth in one of claims 1 through 4, **characterised in that** the upper chord (3) is centered before it is fed to the upper chord welding device (6).

6. The method as set forth in one of claims 1 through 5, **characterised in that** the at least one lower chord (2) and/or the upper chord (3) and/or the at least one diagonal member (4) is firstly unwound from drums (7, 7') before the welding operation to form a lattice girder (1) and is then deformed in a predetermined fashion.

7. The method as set forth in one of claims 1 through 6, **characterised in that** the lattice girder (1) is separated at predetermined cutting positions from the continuously produced line of material (8), and preferably that the lattice girder (1) is then fed to at least one storage location (9).

8. Apparatus for continuously producing a lattice girder (1) comprising a lower chord arrangement which includes at least one lower chord (2), in particular two lower chords (2), an upper chord (3) arranged at a specific height (H) relative to the lower chord arrangement and at least one diagonal member (4) which extends back and forth between the at least one lower chord (2) and the upper chord (3), in particular in a zig-zag form, wherein the at least one lower chord (2) and the upper chord (3) are welded to the at least one diagonal member (4) and the apparatus for that welding operation includes a lower chord welding device (5) and an upper chord welding device (6), wherein the apparatus further includes a cutting device (14) for cutting the upper chord (3), **characterised in that** the apparatus further includes a device (10) for height adjustment of the upper chord (3) during the continuous production of the lattice girder (1).

9. Apparatus as set forth in claim 8, **characterised in that** the device (10) for height adjustment of the upper chord (3) involves a height-adjustable carrier (11) on which is arranged a holding device (12) for the upper chord (3), and preferably that the holding device (12) includes a gripper (13) for releasably fixing the upper chord (3).

10. Apparatus as set forth in claim 8 or 9, wherein the device (10) for height adjustment of the upper chord (3) involves a height-adjustable carrier (11), **characterised in that** the cutting device (14) is arranged on the height-adjustable carrier (11).

11. Apparatus as set forth in one of claims 8 through 10, **characterised in that** the apparatus further includes a device (32, 33, 34) for adjusting the angle position of the lower chord welding device (5), and/or that the apparatus further includes a device (35, 36, 37) for adjusting the height and/or the angle position of the upper chord welding device (6).

12. Apparatus as set forth in one of claims 8 through 11, **characterised in that** the apparatus further includes an advance device (15) for stepwise feed of the upper chord (3) and/or the at least one lower chord (2) to the upper chord welding device (6) and the lower chord welding device (5) respectively.

13. Apparatus as set forth in claim 12, **characterised in that** the advance device (15) is arranged on a linear carriage (16).

14. Apparatus as set forth in claim 12 or 13, **characterised in that** the advance device (15) is movable by way of an eccentric lever (17), and/or that the advance device (15) includes a gripper (18) for releasably fixing the upper chord (3) and/or a gripper (19) for releasably fixing the at least one lower chord (2).

15. Apparatus as set forth in one of claims 12 through 14, wherein the device (10) for height adjustment of the upper chord (3) involves a height-adjustable carrier (11), **characterised in that** the advance device (15) is arranged on the height-adjustable carrier (11).

16. Apparatus as set forth in one of claims 8 through 15, **characterised in that** the apparatus further includes a centering device (20) for the upper chord (3), and preferably that the centering device (20) has a gripper (21) for releasably fixing the upper chord (3).

17. Apparatus as set forth in claim 16, wherein the device (10) for height adjustment of the upper chord (3) involves a height-adjustable carrier (11), **characterised in that** the centering device (20) is arranged on the height-adjustable carrier (11).

18. Apparatus as set forth in one of claims 8 through 17, **characterised in that** the apparatus includes an unwinding device (22) for drums (7, 7') on which the at least one lower chord (2) and/or the upper chord (3) and/or the at least one diagonal member (4) are wound, and preferably that the apparatus further includes a straightening machine (23) for the at least one lower chord (2) and/or the upper chord (3) and/or a bending machine (24) for the at least one diagonal member (4).

19. Apparatus as set forth in one of claims 8 through 18, **characterised in that** the apparatus includes a separating device for separating the lattice girder (1) from the continuously produced line of material (8).

20. Apparatus as set forth in one of claims 8 through 19, **characterised in that** the apparatus includes at least one storage location (9) for storage of the lattice girder (1), and preferably that the apparatus includes a robot device for transporting the lattice girder (1) to the storage location (9).

## Revendications

1. Procédé destiné à la fabrication continue d'une poutre à treillis (1) par soudage d'un dispositif formant membrure inférieure, qui comprend au moins une membrure inférieure (2), en particulier deux membrures inférieures (2), et d'une membrure supérieure (3) disposée à une certaine hauteur (H) par rapport au dispositif formant membrure inférieure avec au moins une membrure diagonale (4) passant en va et vient, en particulier en forme de zigzag, entre la au moins une membrure inférieure (2) et la membrure supérieure (3), dans lequel le soudage de la au moins une membrure inférieure (2) et de la membrure supérieure (3) se fait avec la au moins une membrure diagonale (4) à l'aide d'un dispositif de soudage de membrure inférieure (5) et d'un dispositif de soudage de membrure supérieure (6), **caractérisé en ce que** la hauteur (H) de la membrure supérieure (3) par rapport au dispositif formant membrure inférieure est modifiée pendant la fabrication continue de la poutre à treillis (1), dans lequel la membrure supérieure (3) est découpée avant une modification de sa hauteur (H) par rapport à un dispositif formant membrane inférieure.

2. Procédé selon la revendication 1, **caractérisé en ce que** la position angulaire du dispositif de soudage de la membrure inférieure (5) est modifiée par rapport au dispositif formant membrure inférieure lors de la modification de la hauteur (H) de la membrure supérieure (3).

3. Procédé selon la revendication 1 ou 2, **caractérisé en ce que** la hauteur et / ou la position angulaire du dispositif de soudage de la membrure supérieure (6) est modifiée par rapport au dispositif formant membrure inférieure lors de la modification de la hauteur (H) de la membrure supérieure (3).

4. Procédé selon l'une des revendications 1 à 3, **caractérisé en ce que** la membrure supérieure (3) et / ou la au moins une membrure inférieure (2) est amenée progressivement au dispositif de soudage de la membrure supérieure (6) ou au dispositif de soudage de la membrure inférieure (5).

5. Procédé selon l'une des revendications 1 à 4, **caractérisé en ce que** la membrure supérieure (3) est centrée avant d'être amenée au dispositif de soudage de la membrure supérieure (6).

6. Procédé selon l'une des revendications 1 à 5, **caractérisé en ce que** la au moins une membrure inférieure (2) et / ou la membrure supérieure (3) et /ou la au moins une membrure diagonale (4), avant le soudage à une poutre à treillis (1), sont d'abord déroulées des bobines (7, 7') et sont ensuite déformées d'une manière prédéterminée.

7. Procédé selon l'une des revendications 1 à 6, **caractérisé en ce que** la poutre à treillis (1), dans des positions de coupe prédéterminées, est séparée du cordon de matière (8) fabriqué en continu, et de préférence, **en ce que** la poutre à treillis (1) est amenée ensuite à au moins un lieu de stockage (9).

8. Dispositif destiné à la fabrication continue d'une poutre à treillis (1) à partir d'un dispositif formant membrure inférieure, qui comprend au moins une au moins une membrure inférieure (2), en particulier deux membrures inférieures (2), et d'une membrure supérieure (3) disposée à une certaine hauteur (H) par rapport au dispositif formant membrure inférieure et d'au moins une membrure diagonale (4) passant en va et vient, en particulier en forme de zigzag, entre la au moins une membrure inférieure (2) et la membrure supérieure (3), dans lequel la au moins une membrure inférieure (2) et la membrure supérieure (3) sont soudées avec la au moins une membrure diagonale (4) et le dispositif pour ce soudage comprend un dispositif de soudage de la membrure inférieure (5) et un dispositif de soudage de la membrure supérieure (6), dans lequel le dispositif comprend en outre un dispositif de coupe (14) pour découper la membrure supérieure (3), **caractérisé en ce que** le dispositif comprend encore un dispositif (10) pour le réglage en hauteur de la membrure supérieure (3) pendant la fabrication continue de la poutre à treillis (1).

9. Dispositif selon la revendication 8, **caractérisé en ce qu'**il s'agit dans le dispositif (10) destiné au réglage en hauteur de la membrure supérieure (3) d'une poutre réglable en hauteur (11), sur laquelle est disposé un dispositif de maintien (12) pour la membrure supérieure (3), et de préférence, **en ce que** le dispositif de maintien (12) comprend une pince (13) pour la fixation détachable de la membrure supérieure (3).

10. Dispositif selon la revendication 8 ou 9, dans lequel dans le dispositif (10) pour le réglage en hauteur de la membrure supérieure (3) il s'agit d'une poutre réglable en hauteur (11), **caractérisé en ce que** le dispositif de coupe (14) est disposé sur la poutre réglable en hauteur (11).

11. Dispositif selon l'une des revendications 8 à 10, **caractérisé en ce que** le dispositif comprend en outre un dispositif (32, 33, 34) destiné à régler la position angulaire du dispositif de soudage de la membrure inférieure (5), et / ou **en ce que** le dispositif comprend en outre un dispositif (35, 36, 37) destiné à régler la hauteur et / ou la position angulaire du dispositif de soudage de la membrure supérieure (6).

12. Dispositif selon l'une des revendications 8 à 11, **caractérisé en ce que** le dispositif comprend en outre un dispositif d'avancement (15) pour l'amenée progressive de la membrure supérieure (3) et / ou de la au moins une membrure inférieure (2) au dispositif de soudage de la membrure supérieure (6) ou au dispositif de soudage de la membrure inférieure (5).

13. Dispositif selon la revendication 12, **caractérisé en ce que** le dispositif d'avancement (15) est disposé sur un chariot linéaire (16).

14. Dispositif selon la revendication 12 ou 13, **caractérisé en ce que** le dispositif d'avancement (15) peut être déplacé au moyen d'un levier excentrique (17), et / ou **en ce que** le dispositif d'avancement (15) comprend une pince (18) pour la fixation détachable de la membrure supérieure (3) et / ou une pince (19) pour la fixation détachable de la au moins une membrure inférieure (2).

15. Dispositif selon l'une des revendications 12 à 14, dans lequel il s'agit dans le dispositif (10) pour le réglage en hauteur de la membrure supérieure (3) d'une poutre réglable en hauteur (11), **caractérisé en ce que** le dispositif d'avancement (15) est disposé sur la poutre réglable en hauteur (11).

16. Dispositif selon l'une des revendications 8 à 15, **caractérisé en ce que** le dispositif comprend en outre un dispositif de centrage (20) pour la membrure supérieure (3), et de préférence, **en ce que** le dispositif de centrage (20) présente une pince (21) pour la fixation détachable de la membrure supérieure (3).

17. Dispositif selon la revendication 16, dans lequel il s'agit dans le dispositif (10) destiné au réglage en hauteur de la membrure supérieure (3) d'une poutre réglable en hauteur (11), **caractérisé en ce que** le dispositif de centrage (20) est disposé sur la poutre réglable en hauteur (11).

18. Dispositif selon l'une des revendications 8 à 17, **caractérisé en ce que** le dispositif comprend un dispositif débobineur (22) pour les bobines (7, 7'), sur lequel la au moins une membrure inférieure (2) et / ou la membrure supérieure (3) et / ou la au moins une membrure diagonale (4) sont enroulées, et de préférence, **en ce que** le dispositif comprend en outre une machine à dresser (23) pour la au moins une membrure inférieure (2) et / ou la membrure supérieure (3) et / ou une machine à cintrer (24) pour la au moins une membrure diagonale (4).

19. Dispositif selon l'une des revendications 8 à 18, **caractérisée en ce que** le dispositif comprend un dispositif séparateur pour séparer la poutre à treillis (1) du cordon de matière (8) fabriqué en continu.

20. Dispositif selon l'une des revendications 8 à 19, **caractérisé en ce que** le dispositif comprend au moins un lieu de stockage (9) pour le stockage de la poutre à treillis (1), et de préférence, **en ce que** le dispositif comprend un dispositif formant robot pour le transport de la poutre à treillis (1) vers le lieu de stockage (9).
